(19) Europäisches Patentamt

European Patent Office

Office européen des brevets

(11) Publication number: **0 140 506**
**B1**

(12) **EUROPEAN PATENT SPECIFICATION**

(45) Date of publication of patent specification: **15.04.87**

(51) Int. Cl.⁴: **F 04 B 41/06,** F 04 B 39/02, F 16 J 15/32

(21) Application number: **84305583.1**

(22) Date of filing: **17.08.84**

(54) Combined power steering pump and vacuum pump assembly.

(30) Priority: **12.09.83 US 530951**

(43) Date of publication of application:
**08.05.85 Bulletin 85/19**

(45) Publication of the grant of the patent:
**15.04.87 Bulletin 87/16**

(84) Designated Contracting States:
**DE FR GB IT**

(56) References cited:
**DE-A-3 012 080**
**DE-B-1 254 025**
**US-A-2 921 528**
**US-A-3 534 969**
**US-A-4 094 519**

(73) Proprietor: **GENERAL MOTORS CORPORATION**
**General Motors Building**
**3044 West Grand Boulevard**
**Detroit Michigan 48202 (US)**

(72) Inventor: **Anderson, Stanley Earle**
**3018 Cooper Street**
**Saginaw Michigan, 48602 (US)**
Inventor: **Hegler, Gary Gordon**
**6537 W. Gary Road**
**Chesaning Michigan 48616 (US)**

(74) Representative: **Breakwell, John Neil Bower**
**et al**
**GM Patent Section Vauxhall Motors Limited**
**Luton Office (F6) P.O. Box No. 3 Kimpton Road**
**Luton Bedfordshire LU2 OSY (GB)**

Courier Press, Leamington Spa, England.

EP 0 140 506 B1

## Description

This invention relates to a combined power steering pump and vacuum pump assembly.

The continuing demand for reduced exhaust emissions in automotive vehicles results in a loss of engine performance accompanied by a reduction in the manifold vacuum that is used to assist in the operation of such devices as power brakes, exhaust gas recirculation controls, cruise controls and heating/cooling controls. To continue to meet the vacuum needs, it has been necessary with those engines lacking sufficient manifold vacuum capability to add an auxiliary vacuum pump that is typically either camshaft-driven, belt-driven or arm-actuated. These pumps must be packaged into the selected drive zone within the available underhood space, and their operation consumes energy, so reducing fuel economy as well as adding initial cost to the vehicle. Consequently, when the vehicle design goals' include reduced weight, lower cost and greater fuel economy, the use of an auxiliary vacuum pump is avoided whenever possible.

The present invention is concerned with providing a viable alternative, when added vacuum capability is required, by combining an auxiliary vacuum pump with a power steering pump so as to form a unit that, with respect to the vacuum pump, is readily installable, compact, light-weight, low-cost and energy-efficient.

A tandem arrangement of a hydraulic power steering pump and an air compressor is broadly disclosed in US—A—2 921 528, according to which the power steering pump 105 is stated to be driven by the crankshaft extension of the air compressor 100.

However, in practice the use of a vacuum pump in tandem with a hydraulic power steering pump in the pursuit of the advantages stated above gives rise to the specific technical problem of maintaining the separate integrity of the respective pumps while satisfying their separate requirements, particularly as to lubrication of the vacuum pump.

Preferably the vacuum pump, like the hydraulic power steering pump, is of the vane type, which requires lubrication between its moving parts to reduce wear and heat as well as lubrication between mating surfaces to seal against vacuum loss. Rather than have a separate lubrication system with its attendant requirements, a combined power steering pump and vacuum pump assembly in accordance with the present invention makes use of the hydraulic fluid in the power steering system in a very advantageous manner while ensuring that there is no permanent loss of such hydraulic fluid, in the context of a compact arrangement in which the two pumps are arranged in tandem and are driven by a common drive shaft.

To this end a combined power steering pump and vacuum pump assembly in accordance with the present invention is characterised by the features specified in the characterising portion of claim 1.

In a preferred arrangement in accordance with the present invention, a single vented reservoir is connected to receive the discharge of the vacuum pump as well as supply the hydraulic fluid for circulation in the power steering system by the power steering pump, and also a hydrodynamic lip-type seal is provided about the drive shaft to statically seal the vacuum pump from the power steering pump when the pumps are stopped, but this seal is reversely ribbed so as to effect limited delivery of the steering system fluid to the vacuum pump when running. Fluid in the power steering system is thereby prevented from draining into the vacuum pump when the pumps are stopped, but is delivered thereto to lubricate the same when the pumps are running, and is then delivered together with the vacuum pump discharge air back to the reservoir so that there is no permanent loss of fluid from the power steering system in lubricating the vacuum pump.

In the drawings:

Figure 1 is a longitudinal sectional view on the line 1—1 of Figure 2, in the direction of the arrows, of a combined power steering pump and vacuum pump assembly constituting a preferred embodiment of the present invention, together with a diagrammatic representation of associated components;

Figure 2 is an end elevational view taken on the line 2—2 of Figure 1, in the direction of the arrows;

Figure 3 is a cross-sectional view, with parts in elevation, on the line 3—3 of Figure 1, in the direction of the arrows;

Figure 4 is a longitudinal sectional view on the line 4—4 of Figure 2, in the direction of the arrows;

Figure 5 is a fragmentary sectional view on the line 5—5 of Figure 2, in the direction of the arrows;

Figure 6 is a fragmentary enlarged longitudinal sectional view of a lip-type seal between a hydraulic pump and a vacuum pump shown in Figure 1; and

Figure 7 is a fragmentary view on the line 7—7 of Figure 6, in the direction of the arrows.

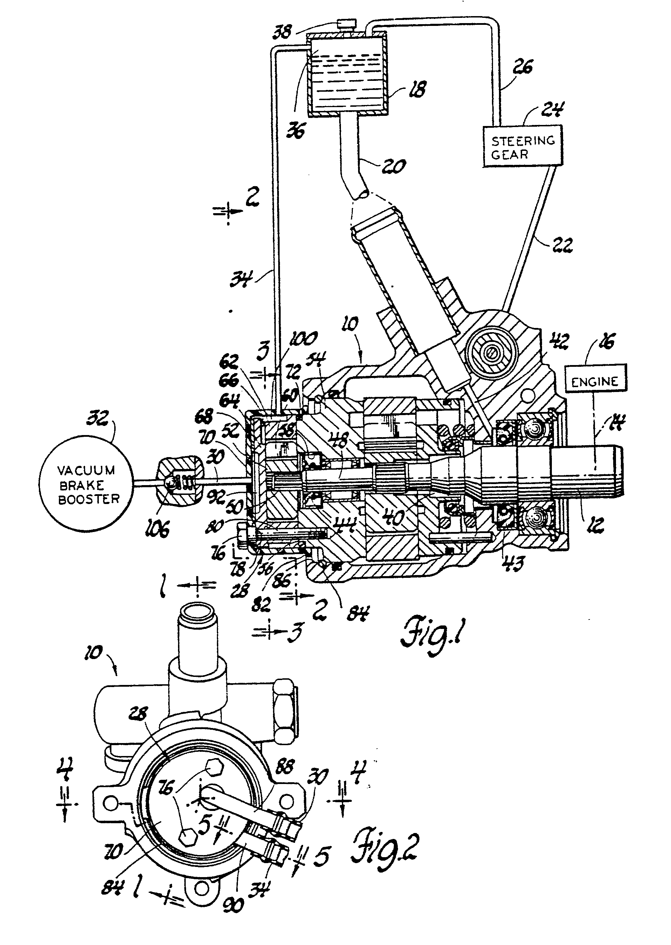

With reference now to Figure 1 of the drawings, there is shown an automotive power steering pump, generally designated 10, having a drive shaft 12 which is driven by way of a belt drive 14 from an internal combustion engine 16. The power steering pump 10 is of the vane type, and receives hydraulic fluid from an elevated reservoir 18 via a hose 20 and delivers the same under pressure via a hose 22 to a power steering gear 24, from which the fluid is returned to the reservoir via a hose 26 to complete the power steering system circuit. In conformity with the present invention, a vacuum pump 28, which is likewise preferably of the vane type, is mounted in tandem on the rear end of the power steering pump, which apart from such adaptation is like that disclosed in US—A—4 373 871. As will become evident, the addition of the vacuum pump 28 to the power steering pump 10 in no way influences the normal functioning of the latter or the steering system which it serves.

In operation of the vacuum system, air is drawn into the vacuum pump 28 through an inlet hose 30 from whatever device(s) it serves, such as a vacuum brake booster 32. This air is then discharged from the vacuum pump 28 through a discharge hose 34 into an air space 36 above the hydraulic fluid in the steering system reservoir 18, such air space being vented to atmosphere through a vented cap 38. For proper operation of the vane-type vacuum pump 28, hydraulic lubrication is required for two reasons. Firstly, it is necessary to provide basic lubrication between the moving parts of the pump to reduce wear and heat. Secondly, it is necessary to maintain a lubricant film between the vacuum pump's mating surfaces to perform a sealing function against vacuum loss. In conformity with the present invention, such lubrication is obtained by the use of the hydraulic fluid in the steering system, while ensuring against permanent loss thereof.

In operation of the hydraulic circuit, fluid from the reservoir 18 passes through the intake hose 20 into the hydraulic power steering pump 10, where a central core cavity 40 extending around the drive shaft 12 normally communicates with the inlet porting of the hydraulic pump 10 via a hole 42. The front end (right end as viewed in Figure 1) of the cavity 40 is sealed by a conventional lip-type shaft seal 43 which seals to the shaft 12, and the other end (left end) of the cavity 40 adjacent the vacuum pump 28 is closed by a special lip-type seal 44 which under static conditions seals to the shaft 12 but under dynamic conditions pumps a limited flow of hydraulic fluid into the vacuum pump, as will be described in more detail later. The hydraulic fluid delivered to the vacuum pump 28 gradually passes through the clearances between the moving parts, and is finally discharged through the discharge hose 34 back into the reservoir 18, so that there is no permanent loss of steering fluid from the steering system.

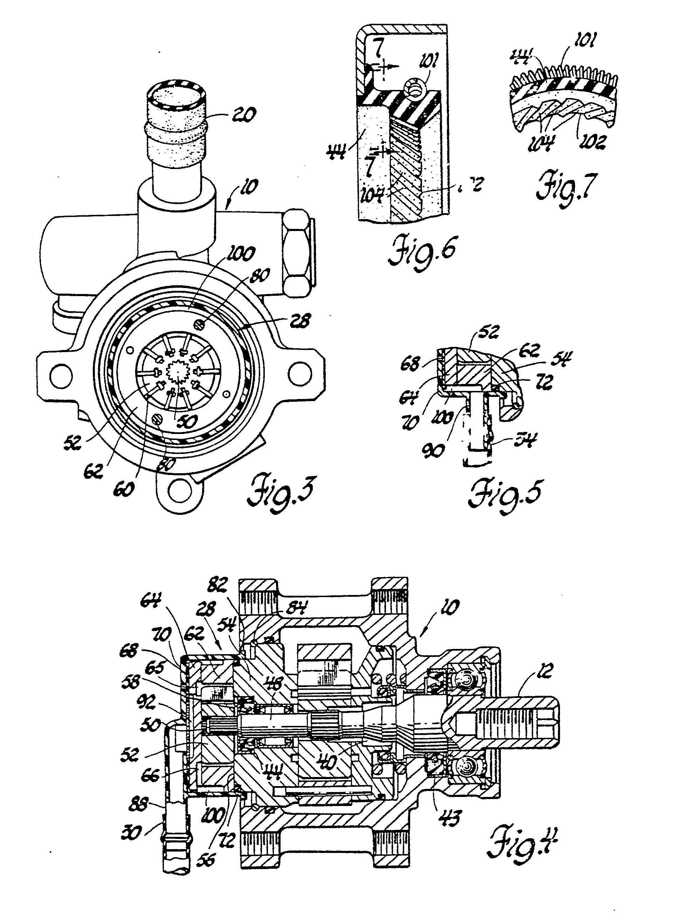

As regards the details of the tandem vacuum pump addition, only two of the components in the power steering pump 10 are significantly affected by the addition of the vacuum pump 28 (see Figures 1 and 2). Firstly, the drive shaft 12 is provided with an extension 48 having serrations 50 to engage serrations in the vacuum pump rotor 52 to transmit drive thereto. Secondly, the thrust plate 54 for the power steering pump is made thicker, with its rear face 56 ported to act as a face plate for the vacuum pump, and is also provided with a counterbore 58 into which the lip-type seal 44 is pressed.

The vacuum pump 28 has, in addition to the rotor 52 and shared thrust plate 564, multiple vanes 60 and a cam pump ring 62 with the same general shape as that in the rotating group in the power steering pump 10 (see Figures 1, 3 and 4).

The vacuum pump ring 62 mates with the rear face of the thrust plate 54, and the rotor 52 fits inside it and over the extension 48 of the shaft 12. An inlet-discharge plate 64 abuts the rear face of the vacuum pump ring 62, and is the rear closure for the vacuum pumping group. The multiple vanes 60 slide in radially extending slots in the rotor to contact the inner contour of the cam pump ring 62, and the vacuum pump is balanced, like the power steering pump, with two intake ports 65 and two discharge ports 66 in the inlet-discharge plate 64 (see Figure 1, where one of the ports 66 is shown along an axial section, and also see Figure 4, where the other port 66 and one of the ports 65 are shown along axial sections), and equal and opposite fluid forces in the rotating group act radially on the shaft 12. Preferably the rotor 52, the vanes 60, the pump ring 62 and the inlet-discharge plate 64 are all sintered metal parts.

A rubber gasket 68 seals between the rear face of the inlet-discharge plate 64 and the inner face of a moulded plastics housing 70 which is cup-shaped and surrounds the balance of the vane-type vacuum pump components. The open end of the housing 70 slides over the thrust plate 54, and a rubber O-ring seal 72 seals therebetween to prevent external loss of fluid.

Two hex-head bolts 76 hold the entire vacuum pump package together, with the underside of the bolt heads bearing on the outer face of the housing 70 (see Figures 1 and 2). A shoulder 78 on the bolts abuts against the inlet-discharge plate 64, and the axial length of the shoulder 78 limits the amount of sealing compression of the rubber gasket 68, so that axial tension in the bolt is also taken through the metal inlet-discharge plate 64 and the vacuum pump ring 62 and not through the plastics housing 70, which would otherwise experience flow of the plastic under the bolt load. The diameter of the bolt shank 80 is also controlled in size so as to be a close fit in the holes in the inlet-discharge plate 64 and the pump ring 62 through which the bolts pass. The threaded end of the bolts 76 engages threads in the thrust plate 54, and the shank diameter also pilots in the counterbore before the threads in the thrust plate to further provide alignment of the vacuum pump components. By this technique, the bolts serve to pull all the parts together axially and align them, thereby eliminating the need for dowel pins. A flange 82 on the plastics housing 70 provides stiffness, but is kept low enough to allow the retaining ring 84 for the thrust plate 54 to slip freely between the flange and the housing bore at final pump assembly.

Inlet and outlet nipples 88 and 90 for the vacuum inlet and outlet hoses 30 and 34 are moulded integral with the plastics housing 70, with the axes of these nipples positioned parallel to one another so that the nipples can be made by the use of a single core slide in the mould, to minimize tooling cost and complexity (see Figure 2).

The nipples could alternatively project from the housing in non-parallel positions, although multiple core slides would then be required.

The air that is drawn in from the vacuum brake booster 32 through the hose 30 and nipple 88 enters a central cavity 92 between the inlet-discharge plate 64 and the housing 70, and then passes through the inlet ports 65 in the inlet-discharge plate to the pumping cavities in the rotating group. Up to this point, vacuum conditions prevail on the inlet side of the vacuum pump. As the pumping cavities traverse the rising portions of the cam contour in the pump ring 62, air is displaced out through the discharge ports 66 in the inlet-discharge plate into a cavity 100 between the inlet-discharge plate and the housing 70. From this point the air passes through the discharge nipple 90 and hose 34 to the reservoir 18, as described earlier. The gasket 68 thus seals the central vacuum pump cavity 92 from the discharge cavity 100, and also prevents any leakage out past the bolts 76. On the other hand, the O-ring seal 72 prevents the discharge cavity 100 from leaking externally.

As already explained, it is necessary to maintain a lubricant film between the mating surfaces of the vacuum pump to prevent wear in the rotating group and also to provide vacuum sealing. The source of this oil is the central core cavity 40 in the hydraulic pump, which is normally filled with oil by leakage past the rotor and vanes in the rotating group, and by its communication via the hole 42 with the hydraulic pump inlet, but is now contained on the inboard side of the lip-type seal 44. The seal 44, as is best seen in Figures 6 and 7, is of the hydrodynamic or helix-seal type such as is disclosed in US—A—3 534 960. However, the seal is modified and utilized in a special manner, as will now be described.

Normally, such hydrodynamic seals are biased by a spring 101 and typically ride on a film of oil and have their helical ribs so oriented that the oil is pumped back inwards from their lip 102. The intent here, however, it to use the seal 44 as a pump to lubricate the vacuum pump 28. To this end, the orientation of the helical ribs 104 on the seal 44 is reversed, so that under dynamic conditions a known and predetermined amount of fluid is pumped from the core cavity 40 of the power steering pump into the rotating group of the vacuum pump, from whence it is carried via the discharge air back to the hydraulic pump reservoir 18 so that no loss of hydraulic fluid from the hydraulic system is experienced. Conversely, when the engine is not running and the vehicle is parked, the reverse helix-seal 44 has static lip contact at 102 all around the shaft 12, to prevent the fluid in the hydraulic system from draining into the vacuum brake lines, or the brake booster, during static conditions. A one-way check valve 106 is shown installed in the vacuum pump inlet line 30, but this is optional: it provides assurance that if the seal 44 should lead statically, the one-way check valve would then prevent the vacuum brake booster and/or other vacuum-assisted device(s) from filling with hydraulic fluid.

Thus amongst its various features and advantages, the combined assembly and particularly the vacuum unit is compact in size, with both a small diameter and a short axial length. Moreover, there is ease of packaging the unit on the engine, as the above unit will readily fit into the space normally occupied by current power steering pumps alone, and does not require additional pulleys in an already crowded accessory belt-drive train. Furthermore, because the vacuum pump is driven by the steering pump shaft, it does not incur the belt losses that would be experienced with a separate belt-driven vacuum pump. Also, its displacement may be readily down-sized, to correspond only to what is required to make up for loss of vacuum, and it therefore need not generate a large surplus. In addition, there is ease of manufacture, particularly as to the thrust plate, which may be double-disc ground. Moreover, the vacuum pump ring, rotor and vanes are all sintered metal, and thus require minimal machining for obtaining close-fitting surfaces. Furthermore, the inlet-discharge plate is well suited to current production process methods and equipment, and the moulded plastics housing is well within the state of current moulding art. Additionally, the vacuum pump and thrust plate can be function-tested as a sub-assembly, which can then be assembled into the hydraulic pump for final pump function testing only after it is known to be satisfactory. Also, the use of sintered metals, minimal machining of components, the use of plastic in the housing, and the use of some existing hydraulic pump components for dual purpose all combine to minimize the overall cost of adding the vacuum pump.

**Claims**

1. A combined power steering pump and vacuum pump assembly for an automotive vehicle, characterised in that the power steering pump (10) and the vacuum pump (28) are arranged in tandem and to be driven by a common shaft (12), the power steering pump (10) is adapted to circulate hydraulic fluid in a power steering system (18 to 26) and the vacuum pump (28) is adapted to draw and discharge air to create a vacuum to operate one or more devices in the vehicle, a vented reservoir (18) is connected to receive the discharge of the vacuum pump (28) as well as to supply the fluid for circulation by and lubrication of the power steering pump (10), and seal means (44) is effective to seal the vacuum pump (28) from the power steering pump (10) when the pumps (10 and 28) are stopped and provide limited delivery of fluid from the power steering pump (10) to the vacuum pump (28) when the pumps (10 and 28) are running, whereby the fluid in the power steering system is prevented from draining into the vacuum pump (28) when stopped but is delivered thereto when running to lubricate the vacuum pump (28) and is then delivered with discharge air from the vacuum pump (28) to the reservoir (18) so that there is no loss of fluid from the power steering system in lubricating the vacuum pump (28).

2. A combined power steering pump and vacuum pump assembly according to claim 1, characterised in that the seal means for sealing the vacuum pump (28) from the power steering pump (10) comprises hydrodynamic lip-type seal means (44) having reverse-oriented helical ribs (104).

**Patentansprüche**

1. Kombination aus Lenkservopumpe und Unterdruckpumpe für ein Kraftfahrzeug, dadurch gekennzeichnet, daß die Lenkservopumpe (10) und die Unterdruckpumpe (28) tandemartig angeordnet und durch eine gemeinsame Welle (12) anzutreiben sind, wobei die Lenkservopumpe (10) ausgelegt ist, Hydraulikfluid in einem Lenkservosystem (18 bis 26) in Umlauf zu bringen und die Unterdruckpumpe (28) ausgelegt ist, Luft abzuziehen und auszustoßen, um einen Unterdruck zum Betrieben eines Grätes oder mehrerer Geräte in dem Fahrzeug zu schaffen, daß ein belüfteter Behälter (18) zur Aufnahme des Ausstoßes der Vakuumpumpe (28) wie auch zur Zuführung des Fluides zum Umlauf durch und zur Schmeirung der Lenkservopumpe (10) angeschlossen ist und daß Dichtmittel (44) wirksam ist, die Unterdruckpumpe (18) gegen die Lenkservopumpe (10) abzudichten, wenn die Pumpen (10 und 28) angehalten sind, und begrenzte Zulieferung von Fluid von der Lenkservopumpe (10) zur Unterdruckpumpe (28) zu schaffen, wenn die Pumpen (10 und 28) laufen, wodurch das Fluid in dem Lenkservosystem daran gehindert wird, in die Unterdruckpumpe (28) abzulaufen, wenn diese angehalten ist, jedoch bei laufender Pumpe zum Schmieren der Unterdruckpumpe (28) dieser zugeliefert wird, und dann mit der Ausstoßluft von der Unterdruckpumpe (28) zu dem Behälter (18) zugeliefert wird, so daß kein Fluidverlust von dem Lenkservosystem beim Schmieren der Unterdruckpumpe (28) entsteht.

2. Kombination aus Lenkservopumpe und Unterdruckpumpe nach Anspruch 1, dadurch gekennzeichnet, daß das Dichtmittel zum Abdichten der Unterdruckpumpe (28) gegen die Lenkservopumpe (10) hydrodynamische Lippen-Dichtmittel (44) mit rückwärts gerichteten wendelförmigen Rippen (104) umfaßt.

**Revendications**

1. Ensemble combiné pompe de direction assistée et pompe à vide pour véhicule automobile, caractérisé en ce que la pompe de direction assistée (10) et la pompe à vide (28) sont disposées en tandem et de façon à être entraînées par un arbre commun (12), la pompe de direction assistée (10) est destinée à faire circuler un fluide hydraulique dans un système de direction assistée (18 à 26) et la pompe à vide (28) est destinée à aspirer et refouler de l'air afin de créer un vide pour faire fonctionner un ou plusieurs dispositifs du véhicule, un réservoir mis à l'atmosphère (18) est branché de façon à recevoir le refoulement de la pompe à vide (28) ainsi qu'à délivrer le fluide que doit faire circuler la pompe de direction assistée (10) et qui est destiné à la lubrification de celle-ci, et des moyens d'étanchéité (44) servent à assurer l'étanchéité de la pompe à vide (28) par rapport à la pompe de direction assistée (10) lorsque les pompes (10 et 28) sont arrêtées et à fournir un débit limité de fluide de la pompe de direction assistée (10) vers la pompe à vide (28) lorsque ces pompes (10 et 28) tournent, de sorte que le fluide se trouvant dans le système de direction assistée est empêché de fuir vers la pompe à vide (28) lorsque celle-ci est à l'arrêt, mais lui est envoyé lorsque cette pompe à vide (28) tourne, de façon à lubrifier celle-ci, et est alors refoulé vers le réservoir (18) avec l'air de refoulement provenant de cette pompe à vide (28), si bien qu'il n'existe pas de perte de fluide en provenance du système de direction assistée lors de la lubrification de la pompe à vide (28).

2. Ensemble combiné pompe de direction assistée et pompe à vide selon la revendication 1, caractérisé en ce que les moyens permettant d'assurer l'étanchéité de la pompe à vide (28) par rapport à la pompe de direction assistée comprennent des joints hydrodynamiques du type à lèvre (44) présentant des nervures hélicoïdales à orientation inversée (104).

Fig.1

Fig.2

Fig.6

Fig.7

Fig.3

Fig.5

Fig.4